# EUROPÄISCHE PATENTSCHRIFT

(11) **EP 0 619 176 B1**
(45) Veröffentlichungstag und Bekanntmachung des Hinweises auf die Patenterteilung: **03.11.1999**
(21) Anmeldenummer: 94102365.7
(22) Anmeldetag: 17.02.1994
(51) Int. Cl.: B29C 65/34, F16L 25/00, H02G 3/06

(54) **Verfahren zum Verschweissen von aus thermoplastischem Kunststoff bestehenden Rohrstücken**
Process for welding thermoplastic pipes
Procédé pour le soudage de tubes en matière plastique

(30) Priorität: 11.03.1993 DE 4307704
(43) Veröffentlichungstag der Anmeldung: 12.10.1994
(73) Patentinhaber: Hegler, Ralph Peter, Dr.-Ing., 97688 Bad Kissingen (DE)
(72) Erfinder: Hegler, Ralph-Peter, Dr., D-97688 Bad Kissingen (DE); Hegler, Wilhelm, D-97688 Bad Kissingen (DE)
(74) Vertreter: Rau, Manfred, Dr. Dipl.-Ing.

(56) Entgegenhaltungen:
- EP-A- 0 378 406
- EP-A- 0 390 748
- EP-A- 0 531 750
- WO-A-88/06517
- WO-A-89/05230
- DE-A- 2 824 395
- DE-A- 3 125 626
- DE-U- 9 107 311
- FR-A- 1 289 224
- FR-A- 1 374 690
- FR-A- 2 078 937
- FR-A- 2 182 587
- GB-A- 1 188 181
- GB-A- 2 268 439
- JP-A- 2 060 730
- US-A- 4 562 934
- PATENT ABSTRACTS OF JAPAN vol. 014 no. 206 (M-0967) ,26.April 1990 & JP-A-02 042295 (SEKISUI CHEM CO LTD;OTHERS: 01) 13.Februar 1990,
- PATENT ABSTRACTS OF JAPAN vol. 018 no. 183 (M-1584) ,29.März 1994 & JP-A-05 340495 (SEKISUI CHEM CO LTD) 21.Dezember 1993,

## Beschreibung

Die Erfindung betrifft ein Verfahren nach dem Oberbegriff des Anspruches 1.

In der Nachrichtentechnik werden vorwiegend extrudierte Vollwandrohre aus Polyäthylen eingesetzt, die also ähnlich Gas- oder Wasserrohren ausgebildet sind. Diese Rohre werden vielfach durch Schweiß-Muffen mediendicht, d.h. flüssigkeits- und gasdicht, miteinander verbunden. Da diese Rohre lediglich eine Schutzfunktion für die von ihnen aufgenommenen Kabel wahrnehmen, könnte ein sogenanntes Wellrohr die gleiche Funktion zumindest kostengünstiger erfüllen, da ein solches Wellrohr aufgrund seiner Wellrohrgeometrie bei gleicher Ringsteifigkeit mit 40 bis 60 % weniger Material hergestellt werden kann. Es kommt hinzu, daß ein solches Wellrohr für den Einsatz als Kabelschutzrohr in der Nachrichtentechnik besonders geeignet ist, da in Richtung seiner Achse das Kabel nur jeweils an den inneren Rohrabschnitten zur Anlage kommt. Die beim Einziehen eines Kabels oder eines Lichtwellenleiters auftretenden Reibungskräfte sind um etwa 30 % niedriger als bei Vollwandrohren, so daß die Länge der Rohrstücke größer gemacht werden kann, was wiederum zu einer Reduktion der Zahl der zu erzeugenden Schweißverbindung führt.

Eine mit Sicherheit mediendichte Verschweißung solcher Wellrohre ist bis heute nicht bekannt, da deren Wanddicken relativ gering sind.

Aus der DE 28 24 395 A1 ist ein für einen Einsatz in Fernwärmeleitungen einsetzbares Kunststoff-Rohr bekannt, das in seiner Längserstreckung abschnittsweise abwechselnd als Wellrohr bzw. als Glattrohr ausgebildet ist. Die Wellrohrabschnitte haben die Aufgabe, durch Wärmeausdehnung auftretende Längenänderungen des Rohres aufzufangen. Die Glattrohrabschnitte dienen unter anderem zur Herstellung von Verbindungen zweier benachbarter Rohrstücke. Sie werden durchtrennt und dann erfolgt dort die Verbindung. Die Verbindung zweier solcher Glattrohrabschnitte erfolgt durch Kleben, Stumpfschweißen, Spiegelschweißen o. dgl. Es kann ein Stumpfschweißfittingring eingesetzt werden.

Aus der EP 0 378 406 A2 ist es bekannt, glattwandige Rohre miteinander zu verbinden. Hierzu wird eine Schweiß-Muffe eingesetzt, die aus einem Außenring und einem Innenring besteht, die über einen Mittelsteg miteinander verbunden sind. In einem der Ringe ist eine Einlage aus leichtschmelzendem Kunststoff vorgesehen, wobei in diese Einlage auch eine Heizung eingesetzt ist. Die miteinander zu verbindenden Rohre werden mit ihren Enden in die zwischen Außenring und Innenring gebildeten Ausnehmungen geschoben. Anschließend wird die Heizung eingeschaltet, wodurch der leichtschmelzende Kunststoff schmilzt und in die freien Zwischenräume fließt. Diese bekannte Lösung erfordert relativ lange Schweiß-Muffen und eine sehr genaue Passung zwischen den Rohrenden und der Schweiß-Muffe, da das geschmolzene Kunststoffmaterial primär durch Kapillarwirkung die Spalte zwischen Innenring und Rohr einerseits und Rohr und Außenring andererseits füllt. Für den rauhen Betrieb auf einer Baustelle im Erdreich ist dieses Verfahren nicht geeignet.

Der Erfindung liegt die Aufgabe zugrunde, ein Verfahren der gattungsgemäßen Art zu schaffen, durch das eine mediendichte Verbindung von Rohrstücken aus Wellrohr ermöglicht wird.

Diese Aufgabe wird erfindungsgemäß durch die Merkmale im Kennzeichnungsteil des Anspruches 1 gelöst. Durch die erfindungsgemäßen Maßnahmen wird erreicht, daß eine mechanisch steife und flächige Verschweißung zwischen den jeweils ein freies Endes eines jeden Rohrstückes bildenden äußeren Rohrabschnitten und zumindest dem Außenring oder dem Innenring der Schweiß-Muffe erzeugt wird. Der Innenring der Schweiß-Muffe steht nicht über die inneren Rohrabschnitte radial nach innen in das Wellrohr vor, so daß auch im Bereich der Schweißverbindung keine Hindernisstelle für das Einziehen von Kabeln oder Lichtwellenleitern geschaffen wird. Die zum Teil erfinderischen Weiterbildungen ergeben sich aus den Unteransprüchen.

Weitere Merkmale, Vorteile und Einzelheiten der Erfindung ergeben sich aus der Beschreibung von Ausführungsbeispielen anhand der Zeichnung. Es zeigt
- Fig. 1: ein Wellrohr im Teil-Längsschnitt,
- Fig. 2: zwei aus einem Wellrohr gebildete Rohrstücke mit einer Schweiß-Muffe vor dem Zusammenfügen,
- Fig. 3: die Rohrstücke und die Schweiß-Muffe nach Fig. 2 nach dem Zusammenschieben zu Beginn des Heizens und Zusammenpressens,
- Fig. 4: die Rohrstücke und die Schweiß-Muffe nach den Fig. 2 und 3 am Ende des Heizens und des Zusammenpressens,
- Fig. 5: eine abgewandelte Ausführungsform einer Schweiß-Muffe,
- Fig. 6: ein Rohrstück mit einer Schweiß-Muffe und einer von dieser gesonderten elektrischen Widerstandsheizung und
- Fig. 7: eine weitere Ausführungsform einer Schweiß-Muffe.

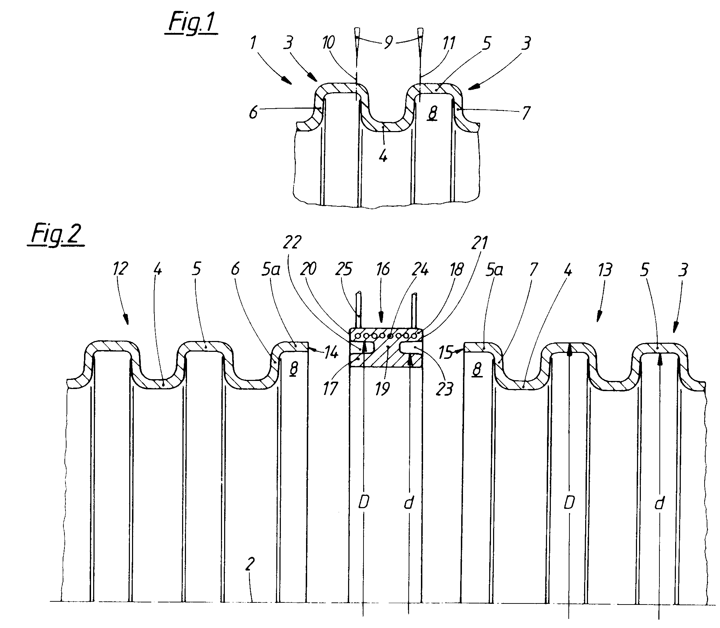

In Fig. 1 ist ein Teilausschnitt eines sogenannten Wellrohres 1 dargestellt, also eines aus schweißfähigem Kunststoff, beipielsweise Polyäthylen, Polypropylen od. dgl. bestehenden Rohres. Es weist eine Mittel-Längs-Achse auf, konzentrisch zu der das Wellrohr 1 mit gewellten Abschnitten 3 versehen ist. Diese weisen konzentrisch zur Achse 2 verlaufende, im wesentlichen kreiszylindrische innere Rohrabschnitte 4 und ebenfalls konzentrisch zur Achse 2 verlaufende im wesentlichen kreiszylindrisch ausgebildete äußere Rohrbereiche 5 auf. Ein innerer Rohrabschnitt 4 ist mit den benachbarten äußeren Rohrbereichen 5 jeweils über angenähert radial zur Achse 2 verlaufende Flanken 6 bzw. 7 verbunden. Zwischen einem äußeren Rohrbereich 5 und den sich an diesen anschließenden Flanken 6, 7 ist ein - von der Achse 2 aus gesehen - radial nach außen gegenüber den inneren Rohrabschnitten 4 zurückgesetzter Hohlraum 8 ausgebildet. Das gesamte Wellrohr 1 wird endlos als Schlauch extrudiert und auf endlos umlaufenden Kalibriereinrichtungen nach dem sogenannten Vakuumverfahren oder dem sogenannten Blasverfahren oder Vakuum-Blas-Verfahren in die gewellte Form gebracht. Derartige Kalibriervorrichtungen sind beispielsweise aus den deutschen Patenten 1 203 940 und 1 211 789 (entspr. GB-PS 971 021) bekannt.

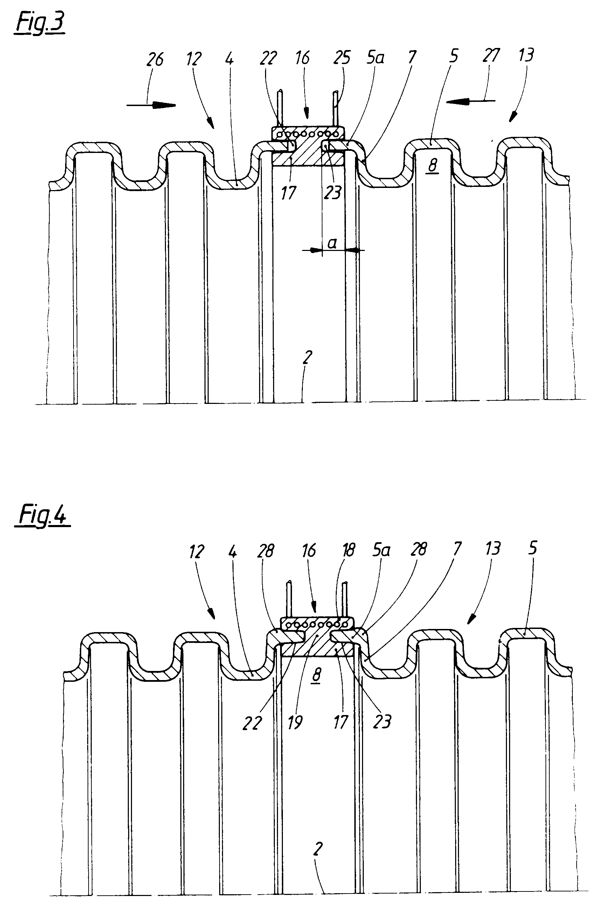

Da die Rohre endlos hergestellt werden, aber nicht endlos transportiert werden können und da zum Einziehen von Kabeln in derartige Rohre die Länge eines Rohrstückes begrenzt ist, muß das endlose Wellrohr 1 durchtrennt werden. Dies geschieht in der Weise, daß es mittels Messern 9 beiderseits eines inneren Rohrabschnittes 4 und der sich hieran anschließenden Flanken 6, 7 mit Schnitten 10, 11 durchtrennt wird, so daß - wie Fig. 2 entnehmbar ist - die entstehenden Rohrstücke 12, 13 an ihren freien Enden kreiszylindrisch äußere Rohrabschnitte 5a mit radial zur Achse verlaufenden Stirnflächen 14, 15 aufweisen, die - bei miteinander fluchtender Anordnung der Rohrstücke 12, 13 - bündig gegeneinander anliegen, also gleichen Innendurchmesser d und gleichen Außendurchmesser D aufweisen.

Zum Verbinden zweier solcher Rohrstücke 12, 13 ist bei dem Ausführungsbeispiel nach den Fig. 2 bis 4 eine Schweiß-Muffe 16 vorgesehen, die aus einem etwa zylindrischen Innenring 17 und einem diesen mit Abstand umgebenden ebenfalls etwa zylindrischen Außenring 18 besteht, die wiederum mittels eines Mittelsteges 19 einstückig miteinander verbunden sind. Die Schweiß-Muffe 16 besteht aus dem gleichen Material wie das Wellrohr 1, beispielsweise also aus Polyäthylen. Zwischen dem Außenring 18 und dem Innenring 17 sind zwei zu den Stirnseiten 20, 21 hin offene ringförmige Ausnehmungen 22, 23 gebildet, die zum Mittelsteg 19 hin leicht verjüngt ausgebildet sind. Im Bereich zwischen dem Mittelsteg 19 und der jeweiligen Stirnseite 20 bzw. 21 ist ihr größter Durchmesser D und ihr kleinster Durchmesser d, so daß bei einem Einschieben der beiden Rohrstücke 12, 13 mit ihren die Stirnflächen 14, 15 aufweisenden äußeren Rohrabschnitten 5a in die Ausnehmungen 22, 23 diese in die in Fig. 3 dargestellte Position kommen, in der die Stirnflächen 14, 15 noch Abstand zum Mittelsteg 19 aufweisen.

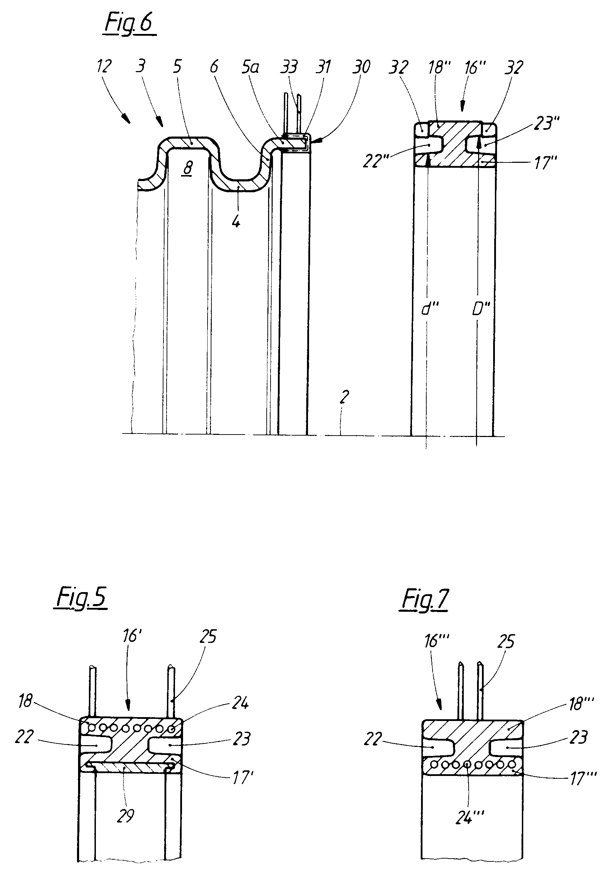

Im Außenring 18 der Schweiß-Muffe 16 ist eine elektrische Widerstandsheizung 24 angebracht, die über Anschlußleitungen 25 mit einer Stromquelle verbindbar ist. Beim Erhitzen dieser Widerstandsheizung 24 wird der Werkstoff des Außenrings 18 und teilweise der Mittelsteg 19 geschmolzen. Außerdem werden die in den Ausnehmungen 22, 23 befindlichen, mit dem Außenring 18 sich berührenden Bereiche der in den Ausnehmungen 22, 23 befindlichen Teile der äußeren Rohrabschnitte 5a plastifiziert. Der Innenring 17 der Schweiß-Muffe 16 wird dagegen nicht plastifiziert. Da während des Heiz- und Plastifizier- bzw. Schmelz-Vorganges die beiden Rohrstücke 12, 13 entsprechend den Druckrichtungspfeilen 26, 27 aufeinanderzu gedrückt werden, werden die in den Ausnehmungen 22, 23 befindlichen äußeren Rohrabschnitte 5a vollständig in diese hineingepreßt und hierbei derart verformt, daß sie über die volle Länge a der Ausnehmungen 22, 23 in diese eindringen, bis ihre - nunmehr verformten - Stirnflächen 14, 15 gegen den Mittelsteg 19 anliegen und ebenfalls mit diesem verschweißt werden, wie Fig. 4 entnehmbar ist. Fig. 4 ist auch entnehmbar, daß die mit der Schweiß-Muffe 16 verschweißten äußeren Rohrabschnitte 5a außerhalb der Schweiß-Muffe 16 am Übergang zur jeweils benachbarten Flanke 6 bzw. 7 einen leicht gestauchten Abschnitt 28 aufweisen. Nach Erreichen der in Fig. 4 dargestellten Verbindung der beiden Rohrstücke 12, 13 mit der Schweiß-Muffe 16 wird der Strom abgeschaltet, so daß der plastifizierte Kunststofff in dieser Position erstarrt, wodurch eine mediendichte, also eine flüssigkeits- und gasdichte Verschweißung der beiden Rohrstücke 12, 13 erreicht wird. Da der Innenring 17 der Schweiß-Muffe 16 nicht erhitzt wird, wird er unter dem Schweißdruck in Richtung der Druckrichtungspfeile 26, 27 nicht verformt. Wie insbesondere Fig. 4 entnehmbar ist, ragt der Innenring 17 radial nicht nach innen über den inneren Rohrabschnitt 4 vor.

Die in Fig. 5 dargestellte Schweiß-Muffe 16' unterscheidet sich von der in den Fig. 2 bis 4 dargestellten nur dadurch, daß im Innenring 17' eine allseitig in diesen eingebettete ringförmige Einlage 29, beispielsweise aus Metall, angeordnet ist, durch die die Steifigkeit des Innenringes 17' und damit der Schweiß-Muffe 16' insgesamt während der Temperaturbelastung, d.h. während der Verschweißung, erhöht wird. Im Vergleich zu der Ausgestaltung nach den Fig. 2 bis 4 ist diese Steifigkeit höher, obwohl dort aufgrund der Nicht-Beheizung des Innenringes 17 auch schon eine erhebliche Steifigkeit erhalten bleibt.

Bei der Ausgestaltung nach Fig. 6 ist die Schweiß-Muffe 16'' nicht mit einer Widerstandsheizung versehen, d.h. auch ihr Außenring 18'' besteht nur aus dem Werkstoff des Wellrohres 1. Es ist eine elektrische Widerstandsheizung 30 für jedes Rohrstück vorgesehen, von denen nur ein Rohrstück 12 dargestellt ist. Diese elektrische Widerstandsheizung 30 ist durch ein aus Widerstandsdrähten bestehendes Heizband 31 gebildet, das U-förmig umgebogen ist, wie Fig. 6 entnehmbar ist. Es kann so auch über die Stirnfläche 14 des Rohrstückes 12 auf dessen äußeren Rohrabschnitt 5a geschoben werden. Dieser wird zusammen mit der elektrischen Widerstandsheizung 30 in die ringförmige Ausnehmung 22'' der Schweiß-Muffe 16'' geschoben, deren Außenring 18'' einen Ausschnitt 32 für die Anschlußleitungen 33 der Widerstandsheizung 30 aufweist. Wie Fig. 6 entnehmbar ist, ist auch der anderen ringförmigen Ausnehmung 23'' ein entsprechender Ausschnitt 32 zugeordnet. Der größte Durchmesser D'' und der kleinste zugeordnete Durchmesser d'' jeweils im mittleren Bereich jeder Ausnehmung 22'' bzw. 23'' ist etwas größer bzw. etwas kleiner als der entsprechende Durchmesser D bzw. d des äußeren Rohrabschnittes 5a, da dieser noch vergrößert bzw. verkleinert wird durch die elektrische Widerstandsheizung 30. Bei dieser Ausgestaltung werden die aneinander zur Anlage kommenden Flächenbereiche des äußeren Rohrabschnittes 5a und der die Ausnehmung 22'' bzw. 23''' begrenzenden Wandabschnitte der Schweiß-Muffe 16'' unmittelbar durch die Widerstandsheizung 30 plastifiziert. Die Steifigkeit der Schweiß-Muffe 16'' bleibt hierbei dadurch erhalten, daß der äußere Bereich des Außenrings 18'' und der innere Bereich des Innenrings 17'' nicht oder nur geringfügig erwärmt und damit nicht plastifiziert werden.

Es kann vorkommen, daß bereits ein Rohr, das aus Rohrstücken 12, 13 besteht, die durch eine Schweiß-Muffe 16 oder 16' oder 16'' miteinander verbunden sind, an Stellen eingezogen oder verlegt wird, wo der Außenring 18, 18'' der Schweiß-Muffe 16, 16', 16'' nicht über die gewellten Abschnitte 3 vorstehen darf. In einem solchen Fall muß dieser Außenring 18 bzw. 18'' nach dem Schweißvorgang abgeschält werden. Damit in einem solchen Fall trotzdem eine zufriedenstellende Verschweißung erreicht wird, kann die Verschweißung entsprechend Fig. 6 erfolgen. Da in diesem Fall auch der Innenring 17'' mit dem äußeren Rohrabschnitt 5a verschweißt ist, kann der Außenring 18'' nach Herstellung der Schweißung abgeschält werden. Es kann aber auch eine Schweiß-Muffe 16''' nach Fig. 7 verwendet werden, die sich von der Schweiß-Muffe 16 nach den Fig. 2 bis 4 nur dadurch unterscheidet, daß die elektrische Widerstandsheizung 24''' im Innenring 17''' ausgebildet ist, während im Außenring 18''' keine solche Heizung angeordnet ist. In diesem Fall übernimmt der Außenring 18''' die Funktion, der Schweiß-Muffe 16''' während des Schweißvorganges die notwendige Steifigkeit zu geben. Dieser Außenring 18''' wird dann nach dem Schweißvorgang abgeschält.

## Patentansprüche

1. Verfahren zum Verschweißen von jeweils zwei aus thermoplastischem Kunststoff bestehenden Rohrstücken (12, 13) von Wellrohren (1) die nur aus gewellten Abschnitten (3) mit in Richtung einer Mittel-Längs-Achse (2) abwechselnd aufeinanderfolgenden inneren Rohrabschnitten (4) und äußeren Rohrbereichen (5) und diese jeweils miteinander verbindenden im wesentlichen radialen Flanken (6, 7) bestehen,
gekennzeichnet durch folgende Verfahrensschritte
- es werden zwei Rohrstücke (12, 13) eingesetzt, die in einem zylindrischen äußeren Rohrabschnitt (5a) eines äußeren Rohrbereichs (5) eines gewellten Abschnitts (3) mit jeweils einer Stirnfläche (14, 15) enden,
- die Rohrstücke (12, 13) werden mit ihren äußeren Rohrabschnitten (5a) in ringförmige Ausnehmungen (22, 23; 22'', 23'') einer Schweiß-Muffe (16, 16', 16'', 16''') aus thermoplastischem Kunststoff geschoben, wobei die Schweiß-Muffe (16, 16', 16'', 16''') jeden von ihr aufgenommenen äußeren Rohrabschnitt (5a) mittels eines Außenrings (18, 18'', 18''') und eines Innenrings (17, 17', 17'', 17''') teilweise umgibt und benachbart zu den Ausnehmungen (22, 23; 22'', 23'') elektrische Heizungen enthält und wobei der Innenring (17, 17', 17'', 17''') sich radial zur Mittel-Längs-Achse (2) ausschließlich zwischen dem äußeren Rohrabschnitt (5a) und dem inneren Rohrabschnitt (4) befindet,
- der Außenring (18, 18'', 18''') und/oder der Innenring (17, 17', 17'', 17''') einerseits und der äußere Rohrabschnitt (5a) andererseits werden mindestens in dem jeweils einander benachbarten Bereich durch Beaufschlagung der elektrischen Heizung mit elektrischem Strom plastifiziert,
- während des Plastifizierens werden die Rohrstücke (12, 13) in Richtung der miteinander fluchtenden Achsen (2) aufeinanderzu gedrückt, bis die ringförmigen Ausnehmungen (22, 23; 22'', 23'') zumindest im wesentlichen mit den plastisch verformten äußeren Rohrabschnitten (5a) gefüllt sind und
- der elektrische Strom wird abgeschaltet, und die äußeren Rohrabschnitte (5a) werden mit der Schweiß-Muffe (16, 16', 16'', 16''') durch Abkühlen verbunden.

2. Verfahren nach Anspruch 1, dadurch gekennzeichnet, daß eine Schweiß-Muffe (16, 16', 16'', 16''') eingesetzt wird, deren Innenring (17, 17', 17'', 17''') und deren Außenring (18, 18'', 18''') durch einen die beiden Ausnehmungen (22, 23; 22'', 23'') voneinander trennenden Mittelsteg (19) miteinander verbunden sind.

3. Verfahren nach Anspruch 1 oder 2, dadurch gekennzeichnet, daß eine Schweiß-Muffe (16. 16') eingesetzt wird, in deren Außenring (18) eine elektrische Widerstandsheizung (24) angeordnet ist.

4. Verfahren nach Anspruch 1 oder 2, dadurch gekennzeichnet, daß eine Schweiß-Muffe (16''') eingesetzt wird, in deren Innenring (17''') eine elektrische Widerstandsheizung (24''') angeordnet ist.

5. Verfahren nach einem der der Ansprüche 1 bis 3, dadurch gekennzeichnet, daß eine Schweiß-Muffe (16') eingesetzt wird, deren Innenring (17') mit einer Versteifungs-Einlage (29) versehen ist.

6. Verfahren nach Anspruch 1 oder 2, dadurch gekennzeichnet, daß eine von der Schweiß-Muffe (16'') gesonderte Widerstandsheizung (30) eingesetzt wird, die auf einen in die jeweilige Ausnehmung (22'', 23'') einzuführenden äußeren Rohrabschnitt (5a) aufgesetzt wird.

7. Verfahren nach einem der Ansprüche 2 bis 6, dadurch gekennzeichnet, daß Schweiß-Muffen (16, 16', 16'', 16''') eingesetzt werden, deren ringförmige Ausnehmungen (22, 23; 22'', 23'') sich von Stirnseiten (20, 21) der Schweiß-Muffe (16, 16', 16'', 16''') zum Mittelsteg (19) hin leicht verjüngen.

## Claims

1. A method for welding two pipe pieces (12, 13) of corrugated pipes (1) made of thermoplastics, which pipe pieces (12, 13) only consist of corrugated portions (3) with internal pipe portions (4) and external pipe portions (5) alternately succeeding in the direction of a central longitudinal axis (2) and with substantially radial flanks (6, 7) interconnecting these two portions,
characterized by the following method steps
- two pipe pieces (12, 13) are used, which end with one front surface (14, 15) each in a cylindrical external pipe segment (5a) of an external pipe portion (5) of a corrugated portion (3);
- the pipe pieces (12, 13) are pushed with their external pipe segments (5a) into annular recesses (22, 23; 22'', 23'') of a welding sleeve (16, 16', 16'', 16''') made of thermoplastics, the welding sleeve (16, 16', 16'', 16''') partially surrounding each external pipe segment (5a), received by the sleeve, by means of an outer ring (18, 18'', 18''') and an inner ring (17, 17', 17'', 17''') and containing electric heating elements adjacent to the recesses (22, 23; 22'', 23''), and the inner ring (17, 17', 17'', 17''') being located exclusively between the external pipe segment (5a) and the internal pipe portion (4) radially to the central longitudinal axis (2);
- the outer ring (18, 18'', 18''') and/or the inner ring (17, 17', 17'', 17''') on the one hand and the external pipe segment (5a) on the other hand are plastified at least in the region where they are adjacent to each other by actuating the electric heating element with electric current;
- during the plastifying process the pipe pieces (12, 13) are pressed towards each other in the direction of the aligning axes (2) until the annular recesses (22, 23; 22'', 23'') are filled at least substantially with the plastically deformed external pipe segments (5a); and
- the electric current is cut off, and the external pipe segments (5a) are connected with the welding sleeve (16, 16', 16'', 16''') by cooling down.

2. A method according to claim 1, characterized in that a welding sleeve (16, 16', 16'', 16''') is used, the inner ring (17, 17', 17'', 17''') of which and the outer ring (18, 18'', 18''') of which are interconnected by a middle web (19) separating the two recesses (22, 23; 22'', 23'') from each other.

3. A method according to claim 1 or 2, characterized in that a welding sleeve (16, 16') is used, in the outer ring (18) of which an electric resistance heating (24) is arranged.

4. A method according to claim 1 or 2, characterized in that a welding sleeve (16''') is used, in the inner ring (17''') of which an electric resistance heating (24''') is arranged.

5. A method according to one of claims 1 to 3, characterized in that a welding sleeve (16') is used, the inner ring (17') of which is provided with a stiffening inlay (29).

6. A method according to claim 1 or 2, characterized in that a resistance heating (30) separated from the welding sleeve (16'') is used, which resistance heating (30) is placed on an external pipe segment (5a) to be inserted into the respective recess (22'', 23'').

7. A method according to one of claims 2 to 6, characterized in that welding sleeves (16, 16', 16'', 16''') are used, the annular recesses (22, 23; 22'', 23'') of which slightly taper from front faces (20, 21) of the welding sleeve (16, 16', 16'', 16''') towards the middle web (19).

## Revendications

1. Procédé de soudage deux par deux de segments (12, 13) de tubes ondulés (1) en matière plastique thermoplastique qui sont uniquement constitués de tronçons ondulés (3) comportant, dans la direction d'un axe longitudinal médian (2), une succession de tronçons intérieurs de tube (4) et de zones extérieures de tube (5) en alternance ainsi que des flancs (6, 7) sensiblement radiaux qui relient à chaque fois ces derniers les uns aux autres,
caractérisé par les étapes de procédé suivantes :
- on utilise deux segments de tube (12, 13) qui se terminent par un tronçon extérieur cylindrique (5a) de zone extérieure de tube (5) de tronçon ondulé (3) comportant chacun une face (14, 15),
- les segments de tube (12, 13) sont glissés, par leurs tronçons extérieurs de tube (5a), dans les creux annulaires (22, 23 ; 22'', 23'') d'un manchon à souder (16, 16', 16'', 16''') en matière plastique thermoplastique, le manchon à souder (16, 16', 16'', 16''') entourant partiellement chacun des tronçons extérieurs de tube (5a) qu'il reçoit au moyen d'un anneau extérieur (18, 18'', 18''') et d'un anneau intérieur (17, 17', 17'', 17''') et comprenant à proximité des creux (22, 23 ; 22'', 23'') un moyen de chauffage électrique, et l'anneau intérieur (17, 17', 17'', 17''') se trouvant, dans la direction radiale par rapport à l'axe longitudinal médian (2), exclusivement entre le tronçon extérieur de tube (5a) et le tronçon intérieur de tube (4),
- l'anneau extérieur (18, 18'', 18''') et/ou l'anneau intérieur (17, 17', 17'', 17''') d'une part et le tronçon extérieur de tube (5a) d'autre part sont ramollis, au moins dans chacune des zones de contiguïté, par alimentation du moyen de chauffage électrique en courant électrique,
- pendant le processus de ramollissement, les segments de tube (12, 13) sont poussés l'un vers l'autre dans la direction des axes (2) alignés l'un par rapport à l'autre jusqu'à ce que les creux annulaires (22, 23 ; 22'', 23'') soient au moins sensiblement remplis par les tronçons extérieurs de tube (5a) ayant subi une déformation plastique, et
- le courant électrique est coupé et les tronçons extérieurs de tube (5a) sont reliés au manchon à souder (16, 16', 16'', 16''') par refroidissement.

2. Procédé selon la revendication 1, caractérisé en ce que l'on utilise un manchon à souder (16, 16', 16'', 16''') dont l'anneau intérieur (17, 17', 17'', 17''') et l'anneau extérieur (18, 18'', 18''') sont reliés entre eux par une nervure médiane (19) qui sépare les deux creux (22, 23 ; 22'', 23'') l'un de l'autre.

3. Procédé selon la revendication 1 ou 2, caractérisé en ce que l'on utilise un manchon à souder (16, 16') dans l'anneau extérieur (18) duquel un chauffage électrique ohmique (24) est disposé.

4. Procédé selon la revendication 1 ou 2, caractérisé en ce que l'on utilise un manchon à souder (16''') dans l'anneau intérieur (17''') duquel un chauffage électrique ohmique (24''') est disposé.

5. Procédé selon l'une des revendications 1 à 3, caractérisé en ce que l'on utilise un manchon à souder (16') dont l'anneau intérieur (17') est pourvu d'une insertion de rigidité (29).

6. Procédé selon la revendication 1 ou 2, caractérisé en ce que l'on utilise un moyen de chauffage ohmique (30) séparé du manchon à souder (16'') qui est mis sur un tronçon extérieur de tube (5a) destiné à être introduit dans le creux correspondant (22'', 23'').

7. Procédé selon l'une des revendications 2 à 6, caractérisé en ce que l'on utilise des manchons à souder (16, 16', 16'', 16''') dont les creux annulaires (22, 23 ; 22'', 23'') s'effilent légèrement depuis les faces d'extrémité (20, 21) du manchon à souder (16, 16', 16'', 16''') jusqu'à la nervure médiane (19).
